# EUROPÄISCHE PATENTANMELDUNG

(11) **EP 4 245 594 A1**
(43) Veröffentlichungstag der Anmeldung: **20.09.2023**
(21) Anmeldenummer: 23161068.4
(22) Anmeldetag: 09.03.2023
(51) Int. Cl.: B60L 9/00, B60L 1/00, B60L 3/00

(54) **ELEKTRISCHE ENERGIEVERSORGUNGSEINRICHTUNG FÜR EIN SCHIENENFAHRZEUG**

(30) Priorität: 14.03.2022 AT 501612022
(71) Anmelder: Siemens Mobility Austria GmbH, 1210 Wien (AT)
(72) Erfinder: Schabbauer, Werner, 7082 Donnerskirchen (AT)
(74) Vertreter: Siemens Patent Attorneys

(57) **Zusammenfassung**

Elektrische Energieversorgungseinrichtung für ein Schienenfahrzeug (1), umfassend eine Zugsammelschiene (2) und einen über einen Hochspannungsumrichter (3) aus der Zugsammelschiene (2) gespeisten Gleichstrom-Zwischenkreis (4), aus welchem Wechselrichter (7, 8) gespeist werden, wobei mindestens ein Hochspannungsakkumulator (13) an den Gleichstrom-Zwischenkreis (4) geschaltet ist.

## Beschreibung

### Technisches Gebiet

Die Erfindung betrifft eine elektrische Energieversorgungseinrichtung für ein Schienenfahrzeug, insbesondere ein Passagierschienenfahrzeug.

### Stand der Technik

Die Versorgung von Passagierschienenfahrzeugen, insbesondere Reisezugwagen, mit elektrischer Energie erfolgt typischerweise über eine Zugsammelschiene von einem Triebfahrzeug aus. Die lokale Erzeugung von elektrischer Energie in den einzelnen Wagen, wie sie mittels Achsgeneratoren vorgenommen wurde, ist nicht mehr gebräuchlich. In den Fahrzeugen selbst sind Akkumulatoren angeordnet, welche während einer Unterbrechung der Energieversorgung durch das Triebfahrzeug, etwa bei einem Lokwechsel oder bei Oberleitungstrennstellen, bestimmte Verbraucher unterbrechungsfrei mit Energie versorgen. Der Energieverbrauch von Passagierschienenfahrzeugen ist in den letzten Jahren insbesondere durch eine Vielzahl an Komfortfunktionen deutlich gestiegen, sodass eine Auswahl getroffen werden muß, welche Verbraucher weiter versorgt werden können. Dabei sind Systeme mit einer Sicherheitsfunktion, beispielsweise eine Notbeleuchtung, Notlüftung, Kommunikationseinrichtungen, etc. sowie die zugehörigen Steuer- und Diagnoseeinrichtungen zu bevorzugen. Allgemeine System, wie die Raumbeleuchtung und Einrichtungen mit hohem Strombedarf, wie Klimaanlagen, Küchengeräte von Speisewägen, Druckluftkompressoren, etc. können nicht aus dem Wagenakkumulator versorgt werden. Diese Akkumulatoren sind typischerweise als Kleinspannungsakkumulatoren mit Spannungen von 24V bis 110V aufgebaut, sodass zum Betrieb von Wechsel- oder Drehstromverbrauchern naturgemäß ein Wechselrichter vorgesehen werden muß. Dabei würde die Entladung des Akkumulators mit so hohen Strömen erfolgen, dass die daraus folgenden Verluste die mögliche Entladezeit noch weiter reduzieren würden. Mit herkömmlichen Batterien und Stromversorgungen ist auch der kurzzeitige Betrieb von energieintensiven Verbrauchern mit möglich.

### Darstellung der Erfindung

Der Erfindung liegt daher die Aufgabe zugrunde, eine elektrische Energieversorgungseinrichtung für ein Schienenfahrzeug anzugeben, wie welcher bei einem Ausfall der Energiezuführung von einer Lokomotive oder einem Triebwagen eine unterbrechungsfreie Weiterversorgung aller elektrischen Verbraucher über einen bestimmten Zeitraum möglich ist.

Die Aufgabe wird durch eine elektrische Energieversorgungseinrichtung für ein Schienenfahrzeug mit den Merkmalen des Anspruchs 1 gelöst. Vorteilhafte Ausgestaltungen sind Gegenstand untergeordneter Ansprüche.

Dem Grundgedanken der Erfindung nach wird eine elektrische Energieversorgungseinrichtung für ein Schienenfahrzeug beschrieben, welche eine Zugsammelschiene und einen über einen Hochspannungsumrichter aus der Zugsammelschiene gespeisten Gleichstrom-Zwischenkreis, aus welchem Wechselrichter gespeist werden aufweist, wobei mindestens ein Hochspannungsakkumulator an den Gleichstrom-Zwischenkreis geschaltet ist.

Dadurch ist der Vorteil erzielbar, auch bei einem Ausfall der Energieversorgung über die Zugsammelschiene einen Weiterbetrieb aller Energieverbraucher sicherzustellen zu können, wobei ein Hochspannungsakkumulator in den Gleichstrom-Zwischenkreis einspeist und somit alle Verbraucher, auch jene, die über Wechselrichter versorgt werden, weiterbetrieben werden können.

Dies ist insbesondere vorteilhaft, da dadurch ein zeitraubendes Wiederinbetriebsetzen bestimmter Verbraucher, wie z.B.: Heizungs-Klima-Lüftungsanlagen (HKL) oder Küchengeräten, entfallen kann, da beispielsweise Programmierungen von Mikrowellenherden oder Geschirrspülmaschinen erhalten bleiben. Ebenso kann ein Ausfall von Passagierinformations- und Unterhaltungseinrichtungen verhindert werden.

Der überbrückbare Zeitraum ist von der Kapazität des Hochspannungsakkumulators bestimmt, wobei die im Passagierbetrieb auftretenden Zeiträume ohne versorgte Zugsammelschiene von wenigen Sekunden bei Fahrleitungstrennstellen bis einigen Minuten bei Lokomotivwechseln reichen. Diese Zeiträume können mit einem gebräuchlichen Hochspannungsakkumulator überbrückt werden, wobei dessen Kapazität aufgrund der niedrigen Verluste in Vergleich zu einem Klein- oder Niederspannungsakkumulator besser genutzt werden.

Erfindungsgemäß ist ein Hochspannungsakkumulator an den Gleichstrom-Zwischenkreis geschaltet, sodass dieser aus dem Gleichstrom-Zwischenkreis geladen werden kann und in diesen einspeisen kann. Die direkte Energieentnahme von Niedervolt-Gleichspannungsverbrauchern aus dem Akkumulator, wie sie bei herkömmlichen Energieversorgungseinrichtungen typischerweise erfolgt, kann bei einer erfindungsgemäßen Energieversorgungseinrichtung nicht ohne weiteres erfolgen, da die Spannung des Hochspannungsakkumulators dafür zu hoch ist. Gleichspannungsverbraucher sind daher über Gleichspannungswandler aus dem Gleichstrom-Zwischenkreis zu versorgen.

Der Hochspannungsakkumulator ist auf eine Nennspannung zu dimensionieren, wie sie für einen typischen Gleichstrom-Zwischenkreis gebräuchlich ist. Dabei sind Spannungen von mindestens einigen hundert Volt, insbesondere mehr als 600 Volt vorteilhaft, da für diese Spannungen Hochspannungsakkumulatoren gut erhältlich sind. Die dabei häufig eingesetzte Lithium-Ionen- Technologie der Hochspannungsakkumulatoren bedarf aufwendiger Lade- und Schutzbeschaltungen, welche vorzugsweise unmittelbar in den Hochspannungsakkumulator integriert ausgeführt werden kann, sodass ein externes Batterieladegerät entfallen kann.

In weiterer Fortbildung der Erfindung ist eine Gleichspannungsverteilerschiene vorgesehen, über welche die Wechselrichter alternativ zur Versorgung über den Gleichstrom-Zwischenkreis gespeist werden können, wobei der Hochspannungsakkumulator zur Einspeisung in die Gleichspannungsverteilerschiene eingerichtet ist. Dadurch ist der Vorteil erzielbar, die Wechselrichter und ggf. die Gleichspannungswandler von einer alternativen Energiezuführung aus versorgen zu können, insbesondere im Fall eines Kurzschlusses an dem Gleichstrom-Zwischenkreis oder eines Defekts des Hochspannungsumrichters.

Dabei ist es besonders vorteilhaft, in der elektrischen Leitung zwischen dem Gleichstrom-Zwischenkreis und dem Hochspannungsakkumulator einen Batterie-Zwischenkreisschalter vorzusehen, über welchen der Hochspannungsakkumulator von dem Gleichstrom-Zwischenkreis abtrennbar ist. Mittels dieses Batterie-Zwischenkreisschalters kann der Hochspannungsakkumulator von einem defekten Gleichstrom-Zwischenkreis abgetrennt werden und die Verbraucher weiter versorgen.

Eine bevorzugte Ausführungsform der Erfindung sieht in der elektrischen Leitung zwischen der Gleichspannungsverteilerschiene und dem Hochspannungsakkumulator einen Batterie-Verteilerschienenschalter vor, über welchen der Hochspannungsakkumulator von der Gleichspannungsverteilerschiene abtrennbar ist. Solcherart ist die Einspeisung des Hochspannungsakkumulators in die Gleichspannungsverteilerschiene zuschaltbar und unterbrechbar, die Gleichspannungsverteilerschiene spannungsfrei geschaltet werden kann.

Besonders vorteilhaft ist es in der elektrischen Leitung zwischen der Gleichspannungsverteilerschiene und dem Hochspannungsakkumulator ein in Stromrichtung zu der Gleichspannungsverteilerschiene leitfähige Diode vorzusehen. Dadurch kann ein Rückladen in den Hochspannungsakkumulator unterbunden werden. Letzteres ist besonders dann vorteilhaft, wenn die Gleichspannungsverteilerschiene gemäß einer weiteren bevorzugten Ausführungsform der Erfindung zur lösbaren elektrischen Verbindung zu weiteren Gleichspannungsverteilerschienen in weiteren, mit dem Schienenfahrzeug gekuppelten Schienenfahrzeugen ausgebildet ist. Gemäß dieser Ausführungsform ist die Gleichspannungsverteilerschiene zu den Stirnseiten des Schienenfahrzeugs geführt und kann dort, ähnlich den Verbindungen der Zugsammelschiene mit den Gleichspannungsverteilerschienen gekoppelter weiterer Schienenfahrzeuge verbunden werden. Die solcherart gebildete, durch mehrere Wagen verlaufende Gleichspannungsverteilerschiene bietet den Vorteil einer wesentlich höheren Redundanz der elektrischen Versorgung. Beispielsweise können entladene Hochspannungsakkumulatoren durch die Zuführung elektrischer Energie aus gekoppelten Wagen kompensiert werden. Dabei ist das Vorsehen einer Diode in der der elektrischen Leitung zwischen der Gleichspannungsverteilerschiene und dem Hochspannungsakkumulator besonders vorteilhaft, da dabei Ausgleichsströme zwischen unterschiedlich geladenen Hochspannungsakkumulatoren, welche auch zum Ansprechen von Schutzeinrichtungen führen können, ausgeschlossen sind.

Erstreckt sich die Gleichspannungsverteilerschiene über mehrere, gekoppelte Schienenfahrzeuge oder einen gesamten Zugverband, so ist es möglich, die Baugruppen der Energieversorgungseinrichtung, insbesondere die Hochspannungsakkumulatoren und die Wechselrichter auf mehrere einzelne Wagen eines Schienenfahrzeugs verteilt anordnen zu können. Ein solches Schienenfahrzeug, beispielsweise ein Triebzug, aus mehreren Wagen kann somit mit einer optimalen Anzahl an Baugruppen der Energieversorgungseinrichtung ausgestattet werden, wobei nicht jeder einzelne Wagen alle Baugruppen beinhalten muß. Solcherart können die Baugruppen verteilt angeordnet werden, um beispielsweise die Gewichtsverteilung gleichmäßiger zu gestalten. Ebenso ist es möglich, einzelne Wagen ohne Hochspannungsakkumulator und ohne Hochspanungsumrichter auszuführen und diese Wagen über die Gleichspannungsverteilerschiene aus gekuppelten Wagen zu versorgen.

Zur Ansteuerung der Schalteinrichtungen einer erfindungsgemäßen Energieversorgungseinrichtung ist es vorteilhaft, eine Steuereinrichtung vorzusehen, welche zur Ansteuerung der Umschalter, des Batterie-Zwischenkreisschalters und des Batterie-Verteilerschienenschalters eingerichtet ist, wobei die Schalthandlungen in Abhängigkeit von bestimmten betrieblichen Parametern vorgenommen werden. Insbesondere ist es vorteilhaft, diese Schalthandlungen automatisiert auszuführen, wobei beispielsweise das Vorhandensein von Spannung an der Zugsammelschiene oder das Vorliegen einer Störung an dem Hochspannungsumrichter entsprechende Schalthandlungen auslöst. Des Weiteren kann der Ladezustand des Hochspannungsakkumulators ermittelt und als Parameter für das Ein- oder Abschalten bestimmter Verbraucher herangezogen werden. So können sicherheitskritische Verbraucher, wie die Notbeleuchtung, Kommunikationseinrichtungen etc. länger in Betrieb gehalten werden, wenn weniger wichtige Verbraucher wie Küchengeräte abgeschaltet werden.

### Kurzbeschreibung der Zeichnungen

Es zeigen beispielhaft:
- **Fig.1**: Elektrische Energieversorgungseinrichtung gemäß dem Stand der Technik.
- **Fig.2**: Elektrische Energieversorgungseinrichtung mit einem Hochspannungsakkumulator.
- **Fig.3**: Elektrische Energieversorgungseinrichtung mit einem Hochspannungsakkumulator und einer Gleichspannungsverteilerschiene.
- **Fig.4**: Elektrische Energieversorgungseinrichtung mit einer kuppelbaren Gleichspannungsverteilerschiene.
- **Fig.5**: Elektrische Energieversorgungseinrichtung mit einer kuppelbaren Gleichspannungsverteilerschiene und Versorgung der Verbraucher aus dem Hochspannungsakkumulator.

### Ausführung der Erfindung

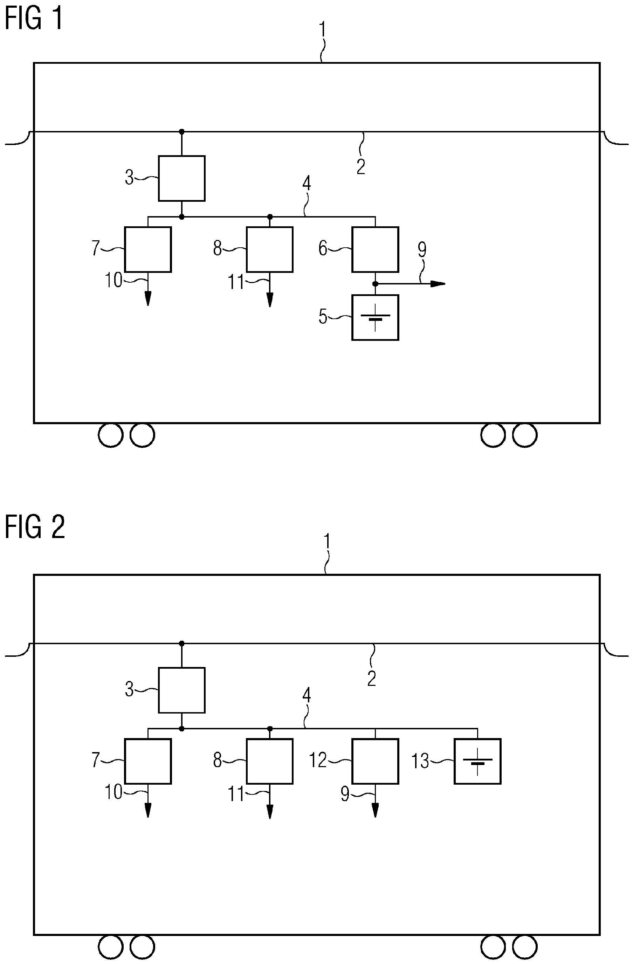

**Fig.1** zeigt beispielhaft und schematisch eine elektrische Energieversorgungseinrichtung gemäß dem Stand der Technik. Es ist ein Schienenfahrzeug 1 dargestellt, welches eine konventionelle Energieversorgungseinrichtung, umfassend eine Zugsammelschiene 2, die das gesamte Schienenfahrzeug 1 durchläuft und die zur Kupplung mit weiteren Fahrzeugen ausgebildet ist. Des Weiteren ist ein Hochspannungsumrichter 3 an die Zugsammelschiene 2 angeschlossen, welcher elektrische Energie in Form von Gleichspannung in einen Gleichstrom-Zwischenkreis 4 einspeist. An diesen Gleichstrom-Zwischenkreis 4 ist ein Wechselrichter 7 für die Erzeugung einer Festfrequenz mit einem Ausgang 10 für Wechselstromverbraucher angeschlossen. Ein weiterer Wechselrichter 8 für die Erzeugung einer Wechselspannung mit variabler Frequenz mit einem Ausgang 11, beispielsweise für eine frequenzgeregelte Klimaanlage, ist ebenso vorgesehen. Aus dem Gleichstrom-Zwischenkreis 4 wird weiters ein Ladegerät 6 zur Ladung eines Akkumulators 5 versorgt, wobei an dem Akkumulator 5 unmittelbar die Gleichstromverbraucher 9 des Schienenfahrzeugs 1 angeschlossen sind. Wird die Versorgung der Zugsammelschiene 2 unterbrochen, so fällt dadurch auch die Versorgung der Wechselrichter 7, 8 sowie des Ladegeräts 6 aus. Allein die unmittelbar von dem Akkumulator 5 direkt versorgten Gleichstromverbraucher 9 können somit über einen bestimmten Zeitraum weiter mit elektrischer Energie versorgt werden. Dabei sind sicherheitskritische Verbraucher, wie die Notbeleuchtung oder Kommunikationseinrichtungen an diesen Akkumulator 5 angeschlossen.

**Fig.2** zeigt beispielhaft und schematisch eine elektrische Energieversorgungseinrichtung mit einem Hochspannungsakkumulator. Es ist ein Schienenfahrzeug 1 dargestellt, welches eine erfindungsgemäße Energieversorgungseinrichtung, umfassend eine Zugsammelschiene 2, die das gesamte Schienenfahrzeug 1 durchläuft und die zur Kupplung mit weiteren Fahrzeugen ausgebildet ist. Dabei speist ein an diese Zugsammelschiene 2 angeschlossener Hochspannungsumrichter 3 elektrische Energie in Form von Gleichspannung in einen Gleichstrom-Zwischenkreis 4 ein. An diesen Gleichstrom-Zwischenkreis 4 sind, wie aus dem Stand der Technik bekannt Wechselrichter 7, 8 angeschlossen, die Wechselspannungen von fester und variabler Frequenz den entsprechenden Verbrauchern 10, 11 zur Verfügung stellen. Ein Hochspannungsakkumulator 13, dessen Nennspannung der Spannung des Gleichstrom-Zwischenkreises 4 entspricht, ist unmittelbar an den Gleichstrom-Zwischenkreis 4 angeschlossen und kann Energie aus dem Gleichstrom-Zwischenkreis 4 entnehmen sowie in diesen einspeisen. Der Gleichstrom-Zwischenkreis 4 weist eine wesentlich höhere Spannung auf als der Akkumulator 5 aus der Energieversorgungseinrichtung gemäß dem Stand der Technik, wie er in Fig. 1 dargestellt ist. Typische Spannungen eines Gleichstrom-Zwischenkreises 4 betragen einige hundert Volt. Daher ist eine unmittelbare Versorgung der Gleichstromverbraucher 9 aus dem Hochspannungsakkumulator 13 unmöglich, bzw. wäre eine komplette Neudimensionierung aller Verbraucher erforderlich, sodass ein Gelichspannungswandler 12 eingesetzt wird, welcher die Spannung des Gleichstrom-Zwischenkreises 4 in die für Gleichstromverbraucher 9 üblichen Spannungen (typisch 24 - 110 Volt) wandelt. Bei einem Ausfall der Versorgung der Zugsammelschiene 2 kann der Hochspannungsakkumulator 13 somit die gesamte Energieversorgung des Schienenfahrzeugs 1 weiter aufrechterhalten, was insbesondere bei der geringen Zeitdauer der zu erwartenden Unterbrechung mit den bei Schienenfahrzeugen gebräuchlichen Abmessungen sowie Kapazitäten von Akkumulatoren möglich ist. Durch die Weiterversorgung des Gleichstrom-Zwischenkreises 4 während eines kurzfristigen Ausfalls der Zugsammelschiene 2 kann auch ein Rangierantrieb effizient mit Energie versorgt werden, da dieser kurzfristig einen hohen Energiebedarf aufweist, der mit Kleinspannungsakkumulatoren nur unter Inkaufnahme hoher Verluste gespeist werden kann.

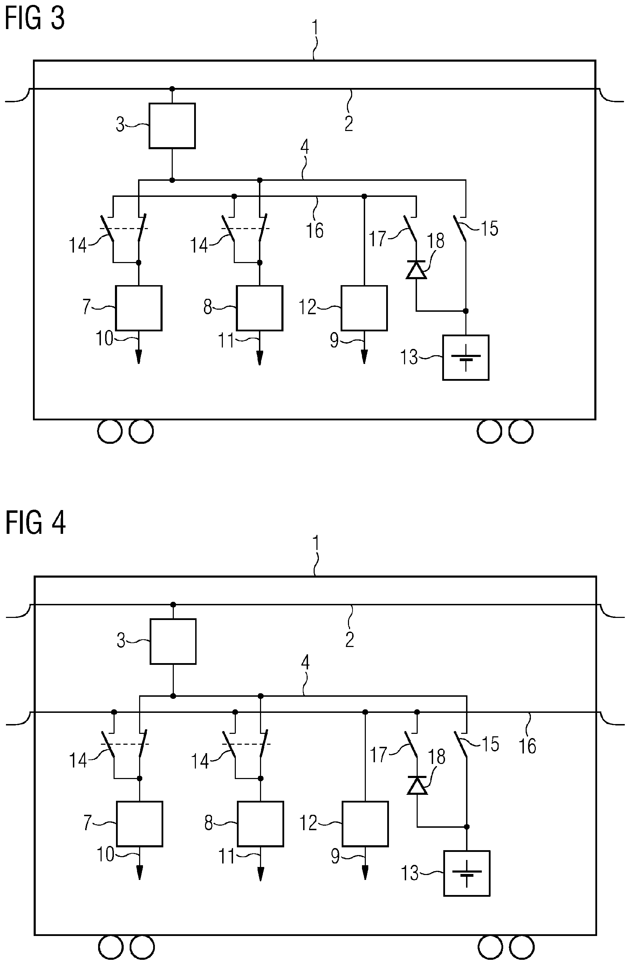

**Fig.3** zeigt beispielhaft und schematisch eine elektrische Energieversorgungseinrichtung mit einem Hochspannungsakkumulator und einer Gleichspannungsverteilerschiene. Es ist eine bevorzugte Ausführungsform der erfindungsgemäßen Energieversorgungseinrichtung dargestellt, welche im Wesentlichen jener, in Fig. 2 gezeigten Ausführung entspricht. Es ist jedoch eine Gleichspannungsverteilerschiene 16 vorgesehen, welche elektrisch parallel zu dem Gleichspannungs-Zwischenkreis 4 geschaltet ist und wobei Umschalter 14 jeweils zwischen den Wechselrichtern 7, 8 und dem Gleichspannungs-Zwischenkreis 4 und der Gleichspannungsverteilerschiene 16 angeordnet sind, sodass die Wechselrichtern 7, 8 alternativ aus der Gleichspannungsverteilerschiene 16 oder dem Gleichspannungs-Zwischenkreis 4 versorgt werden können. Dadurch kann auch bei Defekten an dem Gleichspannungs-Zwischenkreis 4 oder dem Hochspannungsumrichter 3, insbesondere bei Kurzschlüssen die Energieversorgung aus dem Hochspannungsakkumulator 13 weiter aufrechterhalten werden. Dabei ist ein Batterie-Zwischenkreisschalter 15 zwischen dem Gleichspannungs-Zwischenkreis 4 und dem Hochspannungsakkumulator 13 eingefügt, mittels welchem der Hochspannungsakkumulator 13 von dem Gleichspannungs-Zwischenkreis 4 abtrennbar ist. Die Einspeisung vom dem Hochspannungsakkumulator 13 in die Gleichspannungsverteilerschiene 16 erfolgt über einen Batterie-Verteilerschienenschalter 17, mittels welchem der Hochspannungsakkumulator 13 von der Gleichspannungsverteilerschiene 16 abtrennbar ist. Weiters ist eine Diode 18 in der Verbindung vom dem Hochspannungsakkumulator 13 in die Gleichspannungsverteilerschiene 16 vorgesehen, welche die Rückspeisung in den Hochspannungsakkumulator 13 aus der Gleichspannungsverteilerschiene 16 sperrt. Die Gleichstromverbrauchen 9 werden bei dieser Ausführungsform aus einem, an die Gleichspannungsverteilerschiene 16 angeschlossenen Gleichspannungswandler 12 versorgt.

**Fig.4** zeigt beispielhaft und schematisch eine elektrische Energieversorgungseinrichtung mit einer kuppelbaren Gleichspannungsverteilerschiene. Es ist die Energieversorgungseinrichtung aus Fig.3 dargestellt, wobei die Gleichspannungsverteilerschiene 16 durch das gesamte Schienenfahrzeug 1 geführt und an den Stirnseiten des Schienenfahrzeugs 1 zur elektrischen Verbindung, ähnlich der elektrischen Verbindung der Zugsammelschiene 2, ausgebildet ist. Dadurch kann eine, einen gesamten Zugsverband durchlaufende Gleichspannungsverteilerschiene 16 geschaffen werden, sodass ein Energieausgleich innerhalb des Zugsverbandes möglich ist. Sind beispielsweise einzelne Wagen mit unterschiedlich geladenen oder entladenen Hochspannungsakkumulator 13 gekoppelt, so können diese Wagen aus den Hochspannungsakkumulatoren 13 der anderen Wagen versorgt werden. Die Diode 18 verhindert dabei eine Belastung der durchgehenden Gleichspannungsverteilerschiene 16 durch das Kuppeln und Zuschalten von Wagen mit entladenem Hochspannungsakkumulator 13. Ein Laden eines Hochspannungsakkumulators 13 kann nur bei aufrechter Versorgung der Zugsammelschiene 2 durch den Hochspannungsumrichter 3 erfolgen. Das in Fig. 4 dargestellte Ausführungsbeispiel kann insbesondere vorteilhaft bei Schienenfahrzeugen eingesetzt werden, die mehrere einzelne gekuppelte Wagen umfassen, wobei nicht jeder Wagen alle Baugruppen der Energieversorgungseinrichtung beinhaltet, sodass diese Baugruppen über den Zugverband verteilt angeordnet werden können. Dadurch sind auch Wagen realisierbar, die keinen Hochspannungsumrichter 3 und keinen Hochspannungsakkumulator 13 umfassen und von den gekuppelten Wagen aus über die durchgehende Gleichspannungsverteilerschiene 16 versorgt werden.

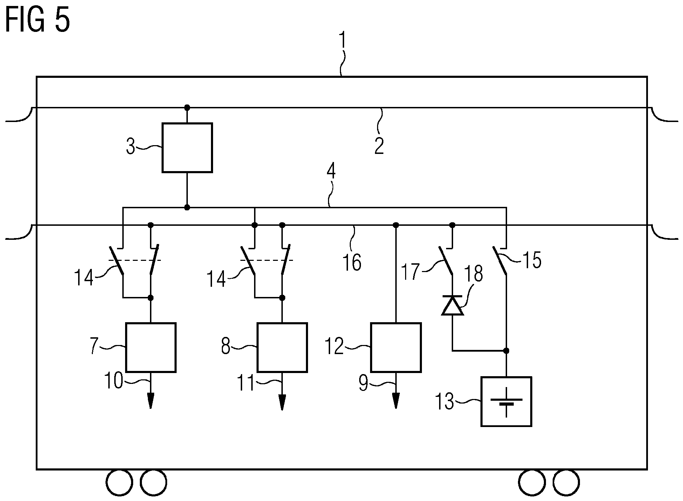

**Fig.5** zeigt beispielhaft und schematisch eine Elektrische Energieversorgungseinrichtung mit einer kuppelbaren Gleichspannungsverteilerschiene und Versorgung der Verbraucher aus dem Hochspannungsakkumulator. Es ist eine Energieversorgungseinrichtung in einem Schienenfahrzeug 1 dargestellt, welche aus denselben Komponenten aufgebaut ist wie die Energieversorgungseinrichtung in dem in Fig.4 dargestellten Ausführungsbeispiel. Jedoch werden in dieser Ausführungsform die Wechselrichter 7, 8 ebenso wie der Gleichspannungswandler im Normalbetrieb, d.h. bei aufrechter Versorgung aus der Zugsammelschiene 2 und betriebsbereiten Hochspanungsumrichter 3 unmittelbar aus der Gleichspannungsverteilerschiene 16 versorgt. Die Umschalter 14 sind in dieser Grundstellung gezeigt, der Batterieverteilerschienenschalter 17 muß zur Herstellung dieser Grundstellung noch geschlossen werden. Diese Ausführungsform weist den Vorteil auf, dass beim Ausfall der Zugsammelschiene 2 oder des Hochspannungsumrichters 3 die Versorgung der Verbraucher unterbrechungsfrei erfolgt, da alle Schalter 14, 17 bereits in der erforderlichen Stellung befindlich sind. Des Weiteren kann dabei auch bei entladenem Hochspannungsakkumulator 13 eine unterbrechungsfreie Versorgung sichergestellt werden, wenn weitere gekuppelte Fahrzeuge über die Gleichspannungsverteilerschiene 16 einspeisen.

### Liste der Bezeichnungen

- 1: Schienenfahrzeug
- 2: Zugsammelschiene
- 3: Hochspannungsumrichter
- 4: Gleichstrom-Zwischenkreis
- 5: Akkumulator
- 6: Ladegerät
- 7: Wechselrichter Festfrequenz
- 8: Wechselrichter variable Frequenz
- 9: Gleichstromverbraucher
- 10: Ausgang zu Wechselstromverbrauchern
- 11: Ausgang zu Wechselstromverbrauchern mit variabler Frequenz
- 12: Gleichspannungswandler
- 13: Hochspannungsakkumulator
- 14: Umschalter
- 15: Batterie-Zwischenkreisschalter
- 16: Gleichspannungsverteilerschiene
- 17: Batterie-Verteilerschienenschalter
- 18: Diode

## Patentansprüche

1. Elektrische Energieversorgungseinrichtung für ein Schienenfahrzeug (1), umfassend eine Zugsammelschiene (2) und einen über einen Hochspannungsumrichter (3) aus der Zugsammelschiene (2) gespeisten Gleichstrom-Zwischenkreis (4), aus welchem Wechselrichter (7, 8) gespeist werden,
**dadurch gekennzeichnet, dass**
mindestens ein Hochspannungsakkumulator (13) an den Gleichstrom-Zwischenkreis (4) geschaltet ist.

2. Elektrische Energieversorgungseinrichtung für ein Schienenfahrzeug (1) nach Anspruch 1,
**dadurch gekennzeichnet, dass**
eine Gleichspannungsverteilerschiene (16) vorgesehen ist, über welche die Wechselrichter (7, 8) alternativ zur Versorgung über den Gleichstrom-Zwischenkreis (4) gespeist werden können, wobei der Hochspannungsakkumulator (13) zur Einspeisung in die Gleichspannungsverteilerschiene (16) eingerichtet ist.

3. Elektrische Energieversorgungseinrichtung für ein Schienenfahrzeug (1) nach Anspruch 2,
**dadurch gekennzeichnet, dass**
in der elektrischen Leitung zwischen dem Gleichstrom-Zwischenkreis (4) und dem Hochspannungsakkumulator (13) ein Batterie-Zwischenkreisschalter (15) vorgesehen ist, über welchen der Hochspannungsakkumulator (13) von dem Gleichstrom-Zwischenkreis (4) abtrennbar ist.

4. Elektrische Energieversorgungseinrichtung für ein Schienenfahrzeug (1) nach Anspruch 3,
**dadurch gekennzeichnet, dass**
in der elektrischen Leitung zwischen der Gleichspannungsverteilerschiene (16) und dem Hochspannungsakkumulator (13) ein Batterie-Verteilerschienenschalter (17) vorgesehen ist, über welchen der Hochspannungsakkumulator (13) von der Gleichspannungsverteilerschiene (16) abtrennbar ist.

5. Elektrische Energieversorgungseinrichtung für ein Schienenfahrzeug (1) nach Anspruch 4,
**dadurch gekennzeichnet, dass**
in der elektrischen Leitung zwischen der Gleichspannungsverteilerschiene (16) und dem Hochspannungsakkumulator (13) ein in Stromrichtung zu der Gleichspannungsverteilerschiene (16) leitfähige Diode (18) vorgesehen ist.

6. Elektrische Energieversorgungseinrichtung für ein Schienenfahrzeug (1) nach Anspruch 5,
**dadurch gekennzeichnet, dass**
die Gleichspannungsverteilerschiene (16) zur lösbaren elektrischen Verbindung zu weiteren Gleichspannungsverteilerschienen (16) in weiteren, mit dem Schienenfahrzeug (1) gekuppelten Schienenfahrzeugen ausgebildet ist.

7. Elektrische Energieversorgungseinrichtung für ein Schienenfahrzeug (1) nach einem der Ansprüche 1 bis 6,
**dadurch gekennzeichnet, dass**
der mindestens eine Hochspannungsakkumulator (13) in ihm integrierte Lade- und Schutzbeschaltungen umfasst.

8. Elektrische Energieversorgungseinrichtung für ein Schienenfahrzeug (1) nach einem der Ansprüche 1 bis 7,
**dadurch gekennzeichnet, dass**
der mindestens eine Hochspannungsakkumulator (13) als Lithium-Ionen Akkumulator ausgeführt ist.

9. Elektrische Energieversorgungseinrichtung für ein Schienenfahrzeug (1) nach einem der Ansprüche 1 bis 8,
**dadurch gekennzeichnet, dass**
der mindestens eine Hochspannungsakkumulator (13) eine Nennspannung größer als 600 Volt aufweist.

10. Elektrische Energieversorgungseinrichtung für ein Schienenfahrzeug (1) nach einem der Ansprüche 1 bis 9,
**dadurch gekennzeichnet, dass**
eine Steuereinrichtung vorgesehen ist, welche zur Ansteuerung der Umschalter (14), des Batterie-Zwischenkreisschalters (15) und des Batterie-Verteilerschienenschalters (17) eingerichtet ist, wobei die Schalthandlungen in Abhängigkeit von bestimmten betrieblichen Parametern vorgenommen werden.

11. Elektrische Energieversorgungseinrichtung für ein Schienenfahrzeug (1) nach Anspruch 10,
**dadurch gekennzeichnet, dass**
die betrieblichen Parameter das Vorhandensein von Spannung an der Zugsammelschiene (2) oder das Vorliegen einer Störung an dem Hochspannungsumrichter (3).

12. Elektrische Energieversorgungseinrichtung für ein Schienenfahrzeug (1) nach einem der Ansprüche 1 bis 11,
**dadurch gekennzeichnet, dass**
die Baugruppen der Energieversorgungseinrichtung, insbesondere der Hochspannungsakkumulator (13) und die Wechselrichter (7, 8) auf mehrere einzelne Wagen eines Schienenfahrzeugs (1) verteilt angeordnet sind und die Gleichspannungsverteilerschiene (16) durch alle Wagen des Schienenfahrzeugs (1) geführt ist.
